# EUROPEAN PATENT SPECIFICATION

(11) **EP 0 818 219 B1**
(45) Date of publication and mention of the grant of the patent: **21.11.2001**
(21) Application number: 97300029.2
(22) Date of filing: 06.01.1997
(51) Int. Cl.: A62D 3/00

(54) **Process for detoxicating noxious wastes**
Verfahren zur Entgiftung schädlicher Abfallstoffe
Procédé pour la détoxification des déchets toxiques

(30) Priority: 10.07.1996 JP 19961796
(43) Date of publication of application: 14.01.1998
(73) Proprietor: Eto, Toyohisa, Tokyo 145 (JP); Sugihara, Masao, Minato-ku, Tokyo 106 (JP)
(72) Inventor: Eto, Toyohisa, Tokyo 145 (JP); Sugihara, Masao, Minato-ku, Tokyo 106 (JP)
(74) Representative: Gaunt, Robert John

(56) References cited:
- EP-A- 0 375 044
- DE-A- 4 141 889
- PATENT ABSTRACTS OF JAPAN vol. 96, no. 7, 31 July 1996 & JP 08 066494 A (T.KIKUCHI ET AL), 12 March 1996,

## Description

The present invention concerns a process for detoxifying noxious wastes which contain materials that are subject to legal regulation as industrial wastes, such as noxious or toxic heavy metals and polychlorinated biphenyls (PCBs)/polybiphenyl chloride (PCB).

Non-reusable wastes such as dusts, sewage sludges and industrial wastes have been incinerated in the usual waste disposal plants so as to reduce their volume and weight. However, since wastes of this kind sometimes contain heavy metals and PCBs that can have various undesired effects on human beings and animals, such as sterility, immunodeficiency and teratogenesis, it is necessary for such wastes to be processed in a way that is safe and does not damage the environment.

Wastes containing noxious metals, such as lead and cadmium, have been treated so far by incineration and then depositing the incinerated ashes at approved or controlled-type disposal sites or subjecting them to solidifying treatment in admixture with cement.

If they are discharged in the form of incinerated ashes, however, the wastes can cause pollution, for example by the contamination of ground water. Further, the cement-solidification method can initially prevent environmental pollution to some extent. However, voids are liable to be formed in the solidification products, depending on the way of formulating or curing the concretes employed, and these allow easy permeation of gases or liquids and, as a result, degradation would occur due to physical and chemical reactions, such as salt damage or neutralization over a prolonged period of time. In particular, it has been noted that there is a risk that materials capable of causing pollution that are contained in the solidified products are leached by acidic rainfall, leading to environmental contamination.

Further, although a number of studies have been made for detoxifying PCB-containing solutions, there remain still various problems and no wholly satisfactory processing method has yet been established.

Patent Abstract of Japan Vol.96, No.7, 31 July 1996 & JP08066494A published on 12 March 1996 discloses that PCBs are subjected to sodium treatment together with a catalyst selected from the group consisting of cobalt chloride, ferric oxide, ethylene diamine and pyrolignous acid, and a solvent selected from ethanol and diethyl sodium and sodium chloride. Further, it is disclosed that the sodium treatment is done by using a mixed ionic water solution of potassium, calcium, aluminum, fluorine, silicon, boron and the like, besides sodium. DE4141889A1 published on 24 June 1993 discloses that waste in the form of a suspension or sludge is contacted with a chelating agent consisting of chitin and/or tannin in order to extract heavy metals from the waste. However, these prior art documents do not teach a means for detoxifying noxious wastes containing noxious heavy metals or PCBs while solidifying them in the form of reusable solidification products in an innoxious state.

Accordingly, it is the object of the present invention to provide a process for detoxifying wastes containing noxious heavy metals or PCBs and solidifying them in the form of reusable solidification products and which can then be stored in a stable innoxious state for a long period of time. The process thus provides an effective way of avoiding the problem of pollution which would otherwise be caused by such wastes.

For the purpose of achieving this object, the present invention provides a process for detoxifying and solidifying wastes containing noxious heavy metals or PCBs and which comprises admixing a detoxifying agent together with cement to the said wastes, and wherein said detoxifying agent comprises sodium, potassium, calcium, lithium, barium, magnesium, strontium, cobalt or nickel, copper and zinc contained in an ionic state and a diluted aqueous solution of a liquid comprising tannin and pyrolignous acid as the main ingredients.

In the cases described above, additives formed by incorporating sodium, potassium, calcium, lithium, barium, magnesium, strontium, cobalt or nickel, copper and zinc in an ionic state in a diluted aqueous solution containing tannin and pyrolignous acid as the main ingredients are used as the detoxifying agent.

The toxifying additive can be obtained by dissolving sodium chloride, potassium chloride, potassium bromide, calcium sulfate, lithium chloride, barium chloride, magnesium chloride, strontium chloride, cobalt chloride or nickel chloride, copper chloride and zinc chloride into a diluted aqueous solution containing tannin and pyrolignous acid as the main ingredients.

A blending ratio for the ingredients of the detoxifying agent is preferably from 41.7 to 83.3 g of sodium chloride, 83.6 to 125.3 g of potassium chloride, 6 to 9 g of potassium bromide, 8 to 12 g of calcium sulfate, 1.6 to 2.4 g of lithium chloride, 12 to 18 g of. barium chloride, 8 to 12 g of magnesium chloride, 4 to 6 g of strontium chloride, 8 to 12 g of cobalt chloride or nickel chloride, 3 to 6 g of copper chloride and 3 to 6 g of zinc chloride dissolved in one liter of a diluted aqueous solution comprising tannin and pyrolignous acid as the main ingredient.

The process for detoxifying materials put under legal regulation as industrial wastes in toxic or noxious wastes (hereinafter referred to as public pollution-causing materials) according to the present invention involves mixing a predetermined detoxifying agent to wastes containing noxious materials such as heavy metals or PCB, for example, usual dusts, sewage sludges, industrial wastes and incineration ashes left after incineration of them.

The detoxifying agent used for the process comprises an aqueous solution formed by incorporating sodium, potassium, calcium, lithium, barium, magnesium, strontium, cobalt or nickel, copper and zinc in an ionic state into a diluted aqueous solution comprising, as the main ingredient, tannic acid and pyrolignous acid that can be obtained, for example, from flood woods.

The detoxifying agent can be formed by dissolving sodium chloride, potassium chloride, potassium bromide, calcium sulfate, lithium chloride, barium chloride, magnesium chloride, strontium chloride, cobalt chloride or nickel chloride, copper chloride and zinc chloride into a diluted aqueous solution comprising tannic acid and pyrolignous acid as the main ingredient.

Further, the mixing ratio of the ingredients is preferably from 41.7 to 83.3 g of sodium chloride, 83.6 to 125.3 g of potassium chloride, 6 to 9 g of potassium bromide, 8 to 12 g of calcium sulfate, 1.6 to 2.4 g of lithium chloride, 12 to 18 g of barium chloride, 8 to 12 g of magnesium chloride, 4 to 6 g of strontium chloride, 8 to 12 g of cobalt chloride or nickel chloride, 3 to 6 g of copper chloride and 3 to 6 g of zinc chloride dissolved in one litre of a diluted aqueous solution comprising tannin and pyrolignous acid as the main ingredient.

The detoxifying agent used in the present invention contains tannic acid and pyrolignous acid having a strong chelating effect to compounds of various elements.

Further, detoxifying agent has a property of causing chlorine substitution reaction and an effect of replacing chlorine atoms in PCB thereby eliminating PCB.

Further, the detoxifying agent has an effect of forming coordination compounds from transition elements.

In view of the above, when the detoxifying agent is mixed with noxious wastes containing heavy metals, PCB or the like, public pollution-causing materials in the wastes can be effectively detoxified by the strong chelating reaction and chlorine substitution reaction and formation of coordination compounds from transition elements caused by the detoxifying agent.

As described above, the method of detoxifying materials causing public pollution in the noxious wastes according to the present invention is practiced by mixing the predetermined detoxifying agent described above together with cement to usual dusts, sewage sludges, industrial wastes, incinerated ashes left after incineration of them or a PCB solution and solidifying them.

In this case, since various kinds of inorganic chlorides are mixed in the detoxifying agent, when the agent is mixed together with portland cement to noxious materials such as sludges, deposits, incineration ashes, industrial wastes and PCB solutions and stirred under the presence of an appropriate water content, acicular crystals are formed due to anionic bondings simultaneously with hydrating reaction inherent to portland cement, so that they are changed and modified into crystal forms with no water content not obtainable by mere hydration of cement, in which organic and inorganic materials are bonded firmly and solidified.

The thus formed solidification products can be utilized as a material having high strength. Particularly, since the solidification products are formed by detoxifying and solidifying the noxious substances as described above, public pollution-causing materials that contaminate the environment are not leached out.

### EXAMPLE

Examples of the present invention are shown below.

Examples of detoxifying public pollution-causing materials according to the present invention, and results of a test for PCB content and a leaching test specified in Environmental Agency Notification No. 13 for solidification products are shown below.

### (Experimental Example 1)

The detoxifying agent used in the present invention was admixed by 6 vol% to a spindle oil containing 2% PCB (transformer oil). The liquid mixture, when stood still, was separated into two layers of an oil phase and an aqueous phase. PCB was measured for the oil phase and the aqueous phase.

As a result, the content of PCB was not more than 0.03 mmg/kg both for the oil phase and the aqueous phase, which was below a standard critical value relevant to industrial wastes. In view of the above, it is considered that the detoxifying agent used in the present invention causes substitution reaction with chlorine atoms in PCBs thereby eliminating PCBs present in the spindle oil.

### (Experimental Example 2)

A demonstrating test for detoxifying and solidifying public pollution-causing materials for solidification products according to the present invention was conducted as below.

500 g of a mixture comprising 10 vol% of the detoxifying agent according to the present invention, 10 vol% of fly ash, 20 vol% of usual incineration ash, 10 vol% of residual liquid after excrement treatment, 20 vol% of sand and 30 vol% of cement were added to 500 ml of a solution in which 2% of PCB was added to spindle oil to form a solidification product. After curing the solidification product in air for 30 days, a leaching test for materials causing environmental pollution was conducted. The leaching test was conducted in accordance with the method specified in Environmental Agency Notification No. 13. The results are shown below.

| | |
|---|---|
| Cadmium or compound thereof (Cd) | less than 0.005 mg/l. |
| Cyan compound (CM) | less than 0.001 mg/l. |
| Organic phosphorous compound (O-P) | less than 0.1 mg/l. |
| Lead or compound thereof (Pb) | less than 0.02 mg/l. |
| Hexavalent chromium compound (Cr) | less than 0.04 ml/l. |
| Arsenic or compound thereof (As) | less than 0.01 mg/l. |
| Mercury or compound thereof (Hg) | less than 0.0005 ml/l. |
| Alkyl mercury compound (R-Hg) | less than 0.0005 ml/l. |
| PCB (PCB) | less than 0.0005 ml/l. |

As described above, the judging criteria relevant to industrial waste containing metals or the like have been cleared and the effectiveness of the present invention has been confirmed also in this experiment.

The present invention can efficiently remove noxious heavy metals and PCBs contained in noxious wastes by the strong chelating reaction, chlorine substitution reaction and formation of coordination compounds from transition elements caused by the detoxifying agent, thereby attaining detoxification of public pollution-causing materials.

Accordingly, it is extremely useful for the prevention of environmental pollution.

Further, according to the present invention, since noxious wastes are mixed and stirred together with portland cement, stabilization and solidification can be attained to such a high hardness as not obtainable by mere hydration of cement, solidification products not leaching noxious materials and usable again can be obtained in addition to the detoxification of the noxious materials.

As described above, the present invention can provide advantageous effects of protecting natural environment of human beings, and plants and animals by preventing environmental pollution, as well as being capable of contributing to the reuse of resources.

## Claims

1. A process for detoxifying and solidifying wastes containing noxious heavy metals or PCBs and which comprises admixing a detoxifying agent together with cement to the said wastes, and wherein said detoxifying agent comprises sodium, potassium, calcium, lithium, barium, magnesium, strontium, cobalt or nickel, copper and zinc contained in an ionic state and a diluted aqueous solution of a liquid comprising tannin and pyrolignous acid as the main ingredients.

2. A process for detoxifying wastes as claimed in claim 1, wherein the detoxifying agent is an aqueous solution formed by dissolving sodium chloride, potassium chloride, potassium bromide, calcium sulfate, lithium chloride, barium chloride, magnesium chloride, strontium chloride, cobalt chloride or nickel chloride, copper chloride and zinc chloride in a diluted aqueous solution comprising tannin and pyrolignous acid as the main ingredients.

3. A process for detoxifying wastes as claimed in claim 1 or claim 2, wherein the detoxifying agent is an aqueous solution formed by dissolving 41.7 to 83.8 g of sodium chloride, 83.6 to 125.3 g of potassium chloride, 6 to 9 g of potassium bromide, 8 to 12 g of calcium sulfate, 1.6 to 2.4 g of lithium chloride, 12 to 18 g of barium chloride, 8 to 12 g of magnesium chloride, 4 to 6 g of strontium chloride, 8 to 12 g of cobalt chloride or nickel chloride, 3 to 6 g of copper chloride and 3 to 6 g of zinc chloride into one litre of a diluted aqueous solution of a liquid comprising tannin and pyrolignous acid as the main ingredients.

## Patentansprüche

1. Verfahren zum Entgiften und Verfestigen von Abfallmaterialien, die schädliche Schwermetalle oder PCBs enthalten, das umfasst, dass ein entgiftendes Mittel zusammen mit Zement den Abfallmaterialien zugemischt wird, wobei das entgiftende Mittel Natrium, Kalium, Calcium, Lithium, Barium, Magnesium, Strontium, Kobalt oder Nickel, Kupfer und Zink, die in ionischem Zustand vorliegen, und eine verdünnte wässrige Lösung einer Flüssigkeit die Tannin und Holzessig als Hauptinhaltsstoffe enthält, umfasst.

2. Verfahren zum Entgiften von Abfallmaterialien nach Anspruch 1, wobei das entgiftende Mittel eine wässrige Lösung ist, die gebildet wird, indem Natriumchlorid, Kaliumchlorid, Kaliumbromid, Calciumsulfat, Lithiumchlorid, Bariumchlorid, Magnesiumchlorid, Strontiumchlorid, Kobaltchlorid oder Nickelchlorid, Kupferchlorid und Zinkchlorid in einer verdünnten wässrigen Lösung gelöst werden, die Tannin und Holzessig als Hauptinhaltsstoffe enthält.

3. Verfahren zum Entgiften von Abfallmaterialien nach Anspruch 1 oder Anspruch 2, wobei das entgiftende Mittel eine wässrige Lösung ist, die gebildet wird, indem 41,7 bis 83,8 g Natriumchlorid, 83,6 bis 125,3 g Kaliumchlorid, 6 bis 9 g Kaliumbromid, 8 bis 12 g Calciumsulfat, 1,6 bis 2,4 g Lithiumchlorid, 12 bis 18 g Bariumchlorid, 8 bis 12 g Magnesiumchlorid, 4 bis 6 g Strontiumchlorid, 8 bis 12 g Kobaltchlorid oder Nickelchlorid, 3 bis 6 g Kupferchlorid und 3 bis 6 g Zinkchlorid in einem Liter einer verdünnten wässrigen Lösung einer Flüssigkeit, die Tannin und Holzessig als Hauptinhaltsstoffe enthält, gelöst werden.

## Revendications

1. Procédé de détoxication et de solidification de déchets contenant des métaux lourds nocifs ou des PCB, qui comprend l'addition par mélange d'un agent de détoxication avec du ciment auxdits déchets et dans lequel ledit agent de détoxication comprend du sodium, du potassium, du calcium, du lithium, du baryum, du magnésium, du strontium, du cobalt ou du nickel, du cuivre et du zinc présents à l'état ionique et une solution aqueuse diluée d'un liquide comprenant du tanin et de l'acide pyroligneux en tant qu'ingrédients principaux.

2. Procédé de détoxication des déchets selon la revendication 1, dans lequel l'agent de détoxication est une solution aqueuse formée en dissolvant du chlorure de sodium, du chlorure de potassium, du bromure de potassium, du sulfate de calcium, du chlorure de lithium, du chlorure de baryum, du chlorure de magnésium, du chlorure de strontium, du chlorure de cobalt ou du chlorure de nickel, du chlorure de cuivre et du chlorure de zinc dans une solution aqueuse diluée comprenant du tanin et de l'acide pyroligneux en tant qu'ingrédients principaux.

3. Procédé de détoxication de déchets selon la revendication 1 ou de la revendication 2, dans lequel l'agent de détoxication est une solution aqueuse formée en dissolvant 41,7 à 83,8 g de chlorure de sodium, 83,6 à 125,3 g de chlorure de potassium, 6 à 9 g de bromure de potassium, 8 à 12 g de sulfate de calcium, 1,6 à 2,4 g de chlorure de lithium, 12 à 18 g de chlorure de baryum, 8 à 12 g de chlorure de magnésium, 4 à 6 g de chlorure de strontium, 8 à 12 g de chlorure de cobalt ou de chlorure de nickel, 3 à 6 g de chlorure de cuivre et 3 à 6 g de chlorure de zinc dans un litre d'une solution aqueuse diluée d'un liquide comprenant du tanin et de l'acide pyroligneux en tant qu'ingrédients principaux.
